# EUROPEAN PATENT APPLICATION

(11) **EP 4 624 884 A1**
(43) Date of publication of application: **01.10.2025**
(21) Application number: 23894290.8
(22) Date of filing: 13.10.2023
(51) Int. Cl.: G01L 1/00

(54) **MANUFACTURING DEVICE**

(30) Priority: 21.11.2022 JP 2022185864
(71) Applicant: FUJIFILM Corporation, Tokyo 106-8620 (JP)
(72) Inventor: OMOTO, Makoto, Tokyo 106-8620 (JP)
(74) Representative: Meissner Bolte Partnerschaft mbB
(86) International application number: PCT/JP2023/037297
(87) International publication number: WO 2024/111278

(57) **Abstract**

A manufacturing device that applies energy to an object measures an amount of energy applied to the object.

## Description

### Technical Field

The present disclosure relates to a manufacturing device.

### Related Art

In the related art, various techniques of measuring energy (for example, pressure, heat, and ultraviolet rays) applied to a surface are known.

First, a technique is known in which a color forming member that forms a color according to an amount of energy in a case where energy is applied thereto is used to measure the amount of energy. An example of such a color forming member includes PRESCALE (registered trademark) (manufactured by FUJIFILM Corporation) with which a color optical density in accordance with applied pressure is obtainable. For example, WO2021/235364A discloses a technique in which a pressure measurement sheet (for example, PRESCALE) is disposed on a calibration sheet to be imaged, a density, size, distortion, and shape of a captured image are corrected based on the calibration sheet included in the captured image, and a density value of the pressure measurement sheet included in an image after the correction is converted into a pressure value.

Second, a sensor device is known in which an electric signal according to pressure or the like is output by a sensor element that detects pressure or the like. For example, JP2020-123119A discloses a sensor device comprising a sensing unit that is disposed on a substrate and includes a sensor element detecting at least one of pressure or temperature and a storage unit that stores calibration data of the sensor element.

### SUMMARY

An object of the present disclosure is to provide a manufacturing device capable of applying energy to an object and measuring an amount of the applied energy.

According to a first aspect, a manufacturing device that applies energy to an object measures an amount of energy applied to the object.

According to the present disclosure, it is possible to apply the energy to the object and measure the amount of the applied energy.

### BRIEF DESCRIPTION OF THE DRAWINGS

Fig. 1 is a block diagram showing an example of a schematic configuration of a manufacturing device.
Fig. 2 is a perspective view of an example of a schematic configuration of a pressurization device.
Fig. 3 is a perspective view of an example of a schematic configuration of a measurement unit.
Fig. 4 is a view of an example of a color forming member and a calibration member.
Fig. 5 is a block diagram showing an example of a hardware configuration of an information processing apparatus.
Fig. 6 is a graph showing an example of characteristic data.
Fig. 7 is a block diagram showing an example of a functional configuration of the information processing apparatus.
Fig. 8 is a flowchart showing an example of pressure measurement processing.

### DETAILED DESCRIPTION

Hereinafter, embodiments for implementing the technique of the present disclosure will be described in detail with reference to drawings. In the present embodiment, an example will be described in which pressure is employed as energy to be applied to an object. Examples of the object include a plate-shaped metal and a semiconductor wafer.

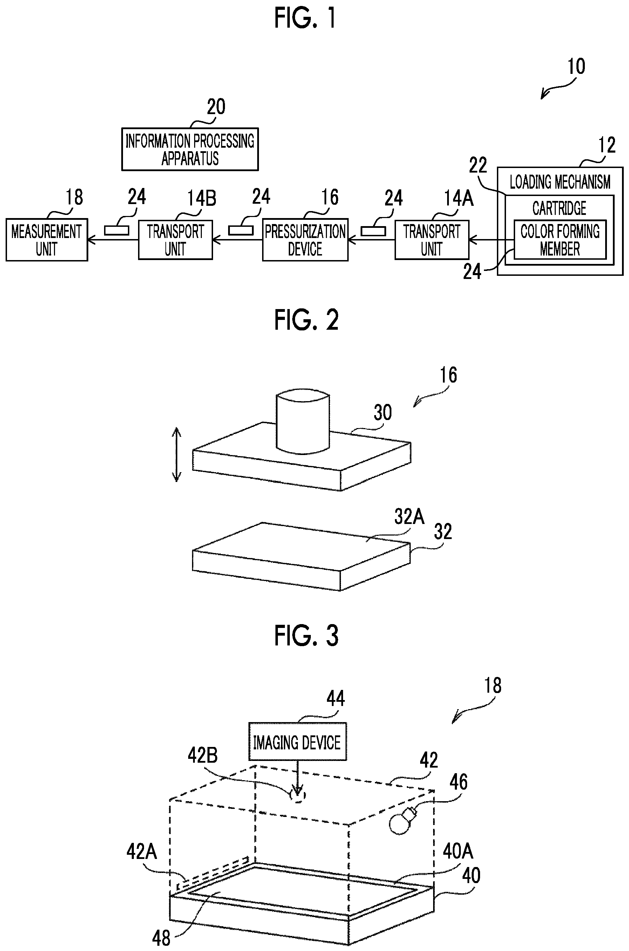

First, a configuration of a manufacturing device 10 according to the present embodiment will be described with reference to Fig. 1. As shown in Fig. 1, the manufacturing device 10 includes a loading mechanism 12, transport units 14A and 14B, a pressurization device 16, a measurement unit 18, and an information processing apparatus 20. In the following, in a case where the transport units 14A and 14B are collectively referred to, the alphabet at the end of the reference numeral is omitted. The loading mechanism 12, the transport units 14A and 14B, the pressurization device 16, the measurement unit 18, and the information processing apparatus 20 are provided in a housing of the manufacturing device 10.

The loading mechanism 12 is configured to load a color forming member 24 from the outside of the housing of the manufacturing device 10. A cartridge 22 is loaded into the loading mechanism 12. A plurality of color forming members 24 are stored in a housing of the cartridge 22. That is, the color forming member 24 in the cartridge form is loaded into the loading mechanism 12. Accordingly, the color forming member 24 is held in the housing of the manufacturing device 10. The cartridge 22 that stores the color forming member 24 may be loaded into the loading mechanism 12 by a manual operation of a user, or may be loaded into the loading mechanism 12 under control of the information processing apparatus 20. For example, in a case of a configuration in which the cartridge 22 is loaded into the loading mechanism 12 under the control of the information processing apparatus 20, the loading mechanism 12 may comprise a gripping mechanism that grips the housing of the cartridge 22 stored in a storage box outside the housing of the manufacturing device 10. In this case, the loading mechanism 12 may comprise an arm part that carries the housing gripped by the gripping mechanism to the loading mechanism 12.

The color forming member 24 forms a color with a density distribution according to an amount of energy applied in a case where energy (pressure in the present embodiment) is applied. The color forming member 24 is an example of a measurement member in which information according to the amount of energy applied is recorded.

As the color forming member 24, it is possible to employ PRESCALE (registered trademark) (manufactured by FUJIFILM Corporation) with which a color optical density in accordance with applied pressure is obtainable. The PRESCALE is obtained by coating a color former including a microcapsule in which colorless dye is included and a color developer to a sheet-shaped support. In a case where pressure is applied to the PRESCALE, the microcapsule is broken and the colorless dye is adsorbed to the color developer to form a color. Further, since the color former contains a plurality of types of microcapsules having different sizes and strengths, the number of microcapsules that are broken according to the applied pressure is different, and thus the color optical density is also different. Therefore, with observation of the color optical density, it is possible to measure magnitude of the pressure applied to the PRESCALE, pressure distribution, and the like.

The color forming member 24 is subjected to a lamination process and dust protection processing. The lamination process on the color forming member 24 may be performed in a step of transporting the color forming member 24 by the transport unit 14A.

As shown in Fig. 2, the pressurization device 16 includes a flat plate-shaped pressurization member 30 and a flat plate-shaped pedestal 32. The object to be pressurized (hereinafter simply referred to as "object") and the color forming member 24 are placed on a placement surface 32A of the pedestal 32 in a state of being superimposed. The pressurization member 30 pressurizes the object, that is, applies pressure to the object under the control of the information processing apparatus 20. In a case where the pressurization is performed on the object, the pressurization member 30 moves in a direction approaching the placement surface 32A (downward direction in the example of Fig. 2), and in a case where the pressurization is completed, the pressurization member 30 moves in a direction away from the placement surface 32A (upward direction in the example of Fig. 2). The pressurization member 30 is controlled in accordance with set parameters such as a pressure value and an angle of the pressurization member 30. The pressurization device 16 is an example of an application device that applies energy to the object. The pressurization member 30 may be a roller or a roller pair, instead of the flat plate shape.

The transport unit 14A takes out the sheet-shaped color forming member 24 stored in the housing of the cartridge 22 one by one and transports the taken-out color forming member 24 to the placement surface 32A. The transport unit 14A may be an electrostatic type in which the transport is performed by charging the color forming member 24 to be adsorbed, or may be a suction type in which the transport is performed by adsorbing the color forming member 24 by a suction cup, air suction, or the like. Further, the transport unit 14A may be a physical transport type in which the color forming member 24 is transported by a transport belt or the like.

The transport unit 14A may transport the color forming member 24 separately from the object. Further, in a case where the color forming member 24 is attached to the object, such as a case where the object is coated with the color forming member 24, the transport unit 14A may transport the color forming member 24 together with the object.

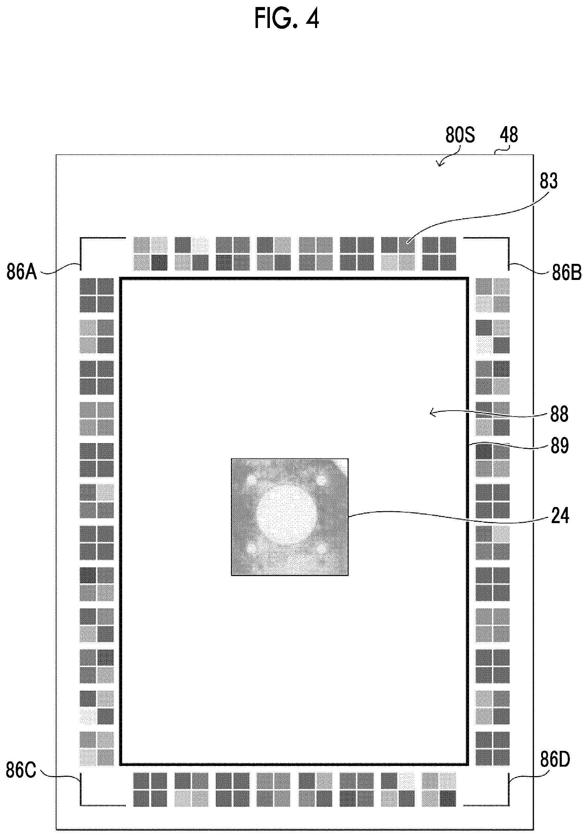

The measurement unit 18 measures a distribution of the pressure value applied to the object. In the present embodiment, the measurement unit 18 reads the color forming member 24 to measure the distribution of the pressure value. Further, the measurement unit 18 measures the distribution of the pressure value in a state where external light to the color forming member 24 is blocked by a light shielding member 42 (refer to Fig. 3). Further, the measurement unit 18 reads the color forming member 24 to measure the distribution of the pressure value in a state where the color forming member 24 is disposed on a calibration member 48 (refer to Fig. 4).

An example of a configuration of the measurement unit 18 will be described with reference to Fig. 3. As shown in Fig. 3, the measurement unit 18 includes a flat plate-shaped pedestal 40, the light shielding member 42, an imaging device 44, and an illumination device 46. The calibration member 48, which will be described below, is disposed on the placement surface 40A of the pedestal 40. In Fig. 3, the light shielding member 42 is indicated by a broken line.

The light shielding member 42 is configured of five surfaces other than a bottom surface of a rectangular parallelepiped, and is provided on the pedestal 40. The light shielding member 42 blocks the external light to the color forming member 24 disposed on the calibration member 48. A slit 42A having a size through which the color forming member 24 can pass is provided on one surface of the four side surfaces of the light shielding member 42. An imaging hole 42B, which is a hole for the imaging device 44 to image the color forming member 24, is provided on the upper surface of the light shielding member 42.

The imaging device 44 comprises an image sensor such as a charge coupled device (CCD) image sensor or a complementary metal oxide semiconductor (CMOS) image sensor. The imaging device 44 images the color forming member 24 disposed on the calibration member 48 via the imaging hole 42B, and outputs image data obtained by the imaging to the information processing apparatus 20. Examples of the imaging device 44 include a camera of a smartphone.

The illumination device 46 is installed at a position between the light shielding member 42 and the color forming member 24 disposed on the calibration member 48, and irradiates the color forming member 24 with light.

The calibration member 48 is disposed on the placement surface 40A of the pedestal 40. The calibration member 48 is subjected to the dust protection processing.

In the present embodiment, the imaging device 44 performs the imaging in a state where the color forming member 24 is placed on the calibration member 48. Accordingly, the imaging device 44 acquires an image including the calibration member 48 and the color forming member 24 (hereinafter referred to as "color forming member image"). The color forming member image may be affected by characteristics of the imaging device 44, illumination conditions (for example, illuminance and color temperature) in an environment in which the imaging is performed, an imaging angle, an imaging distance, and the like. That is, there may be a variation in distortion, inclination, size, shading, and color of the color forming member image. The calibration member 48 is to correct the influences thereof on the color forming member image.

Fig. 4 shows a surface to be imaged 80S of the calibration member 48 with the color forming member 24 placed thereon. The calibration member 48 is a support formed in a sheet-like shape or a plate-like shape, the support being configured to include, for example, paper, a resin, or the like. As shown in Fig. 4, the surface to be imaged 80S includes a plurality of patches 83, four figures 86A to 86D, a central region 88, and a frame 89 that surrounds outer edges of the central region 88. Colors of the plurality of patches 83 may be different from each other, or there may be two or more patches 83 having the same color.

The plurality of patches 83 are to calibrate the color of the color forming member 24 in the color forming member image. The four figures 86A to 86D are to indicate a range required to be included in an angle of view in a case where the imaging device 44 images the calibration member 48 and the color forming member 24. The frame 89 is to correct a shape, such as the distortion, the inclination, and the size, of the color forming member image.

The correction of the color forming member image using the calibration member 48 may be executed by a processor provided in the imaging device 44, or may be executed by a processor provided in the information processing apparatus 20. In the present embodiment, an example will be described in which the processor provided in the imaging device 44 executes the correction of the color forming member image using the calibration member 48. That is, the color forming member image output by the imaging device 44 is an image after the correction.

The transport unit 14B transports the color forming member 24 to a position where the external light is blocked after the energy is applied to the object. Specifically, the transport unit 14B transports the color forming member 24 onto the calibration member 48 via the slit 42A after the pressurization device 16 completes the pressurization against the object. The transport unit 14B may be of the electrostatic type, the suction type, or the physical transport type, which are described above. Further, the transport unit 14A and the transport unit 14B may be of the same type or different types.

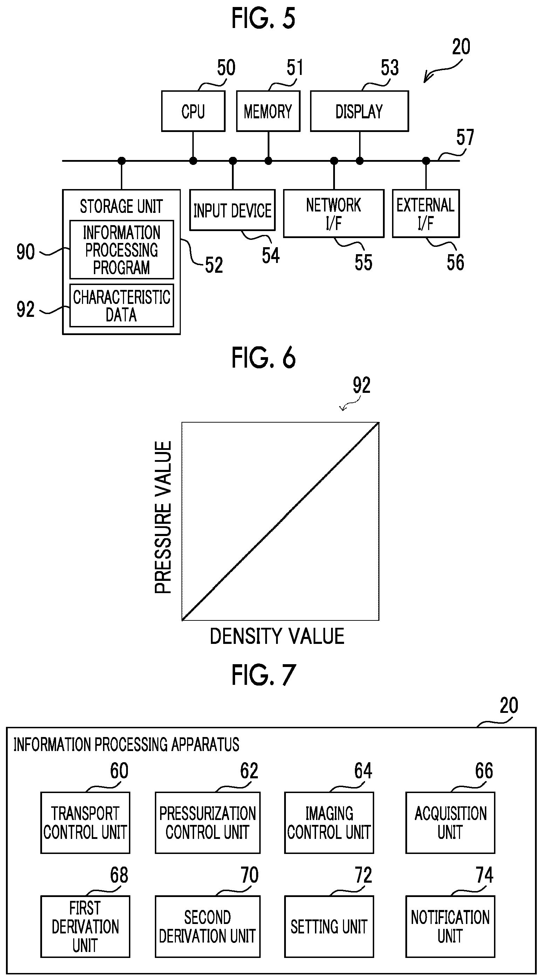

Next, a hardware configuration of the information processing apparatus 20 according to the present embodiment will be described with reference to Fig. 5. As shown in Fig. 5, the information processing apparatus 20 includes a central processing unit (CPU) 50, a memory 51 as a temporary storage area, and a nonvolatile storage unit 52. Further, the information processing apparatus 20 includes a display 53 such as a liquid crystal display, an input device 54 such as a keyboard and a mouse, a network interface (I/F) 55 connected to a network, and an external I/F 56. The CPU 50, the memory 51, the storage unit 52, the display 53, the input device 54, the network I/F 55, and the external I/F 56 are connected to a bus 57. The CPU 50 is an example of a processor. The transport units 14A and 14B, the pressurization device 16, the measurement unit 18, and the like are connected to the external I/F 56.

The storage unit 52 is formed of a hard disk drive (HDD), a solid state drive (SSD), a flash memory, or the like. The storage unit 52 as a storage medium stores an information processing program 90. The CPU 50 reads out the information processing program 90 from the storage unit 52, develops the information processing program 90 into the memory 51, and executes the developed information processing program 90.

Further, the storage unit 52 stores characteristic data 92. Fig. 6 shows an example of the characteristic data 92. In the characteristic data 92, a relationship between the amount of energy, which is applied to the color forming member 24, (pressure value in the present embodiment) and the density of the color forming member 24, which is included in the image obtained by imaging the color forming member 24, is predetermined. As the amount of energy, for example, a physical quantity according to energy that can be measured by using the color forming member 24, such as the pressure value, can be employed as appropriate. Although the pressure value and a density value are proportional to each other in Fig. 6, a relationship between the pressure value and the density value may not be proportional.

Next, a functional configuration of the information processing apparatus 20 according to the present embodiment will be described with reference to Fig. 7. As shown in Fig. 7, the information processing apparatus 20 includes a transport control unit 60, a pressurization control unit 62, an imaging control unit 64, an acquisition unit 66, a first derivation unit 68, a second derivation unit 70, a setting unit 72, and a notification unit 74. The CPU 50 executes the information processing program 90 to function as the transport control unit 60, the pressurization control unit 62, the imaging control unit 64, the acquisition unit 66, the first derivation unit 68, the second derivation unit 70, the setting unit 72, and the notification unit 74.

The transport control unit 60 controls the transport unit 14A and the transport unit 14B. The pressurization control unit 62 controls the pressurization device 16. The imaging control unit 64 controls the imaging device 44. The acquisition unit 66 acquires, from the imaging device 44, the color forming member image captured by the imaging device 44 under the control of the imaging control unit 64.

The first derivation unit 68 derives the pressure distribution applied to the color forming member 24 by using the characteristic data 92, based on the color forming member image acquired by the acquisition unit 66. Specifically, the first derivation unit 68 converts the density value into the pressure value, by using the characteristic data 92, for each pixel of the color forming member image to derive the pressure distribution.

The second derivation unit 70 derives the set parameter of the pressurization device 16 by using the pressure distribution derived by the first derivation unit 68. Specifically, the second derivation unit 70 derives the set parameter at which the pressure distribution, which is derived by the first derivation unit 68, approaches a target pressure distribution. For example, in a case where the target pressure distribution is uniform, the second derivation unit 70 derives an angle or the like of the pressurization member 30 at which the pressure distribution derived by the first derivation unit 68 approaches the uniform distribution.

The setting unit 72 updates the set parameter of the pressurization device 16 with the set parameter derived by the second derivation unit 70.

In a case where a deviation amount between the pressure distribution derived by the first derivation unit 68 and a reference value is equal to or larger than a threshold value, the notification unit 74 performs control of displaying a warning message on the display 53 to issue notification of warning. An example of the deviation amount includes a deviation amount from a predetermined limit sample regarding a color forming degree (that is, the pressure value and the pressure distribution) of the color forming member 24.

The reference value may be, for example, a statistical value such as an average value or a variance of the pressure value and the pressure distribution, which are measured in the past. Further, the notification unit 74 may set the threshold value using the statistical value of the pressure value and the pressure distribution, which are measured in the past.

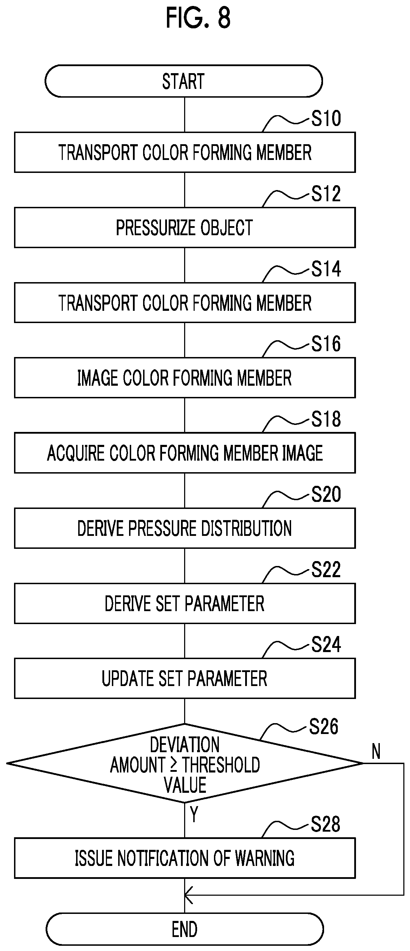

Next, an action of the information processing apparatus 20 according to the present embodiment will be described with reference to Fig. 8. The CPU 50 executes the information processing program 90 to execute pressure measurement processing shown in Fig. 8. The pressure measurement processing shown in Fig. 8 is executed, for example, in a case where an instruction to start the execution is input by the user via the input device 54.

In step S10 of Fig. 8, the transport control unit 60 controls the transport unit 14A to take out the sheet-shaped color forming member 24 stored in the housing of the cartridge 22 one by one and to transport the taken-out color forming member 24 to the placement surface 32A. In step S12, the pressurization control unit 62 controls the pressurization device 16 to pressurize the object placed on the color forming member 24, which is transported to the placement surface 32A.

In step S14, the transport control unit 60 controls the transport unit 14B to transport the color forming member 24 onto the calibration member 48 via the slit 42A. In step S16, the imaging control unit 64 controls the imaging device 44 to perform the imaging in a state where the color forming member 24 is placed on the calibration member 48.

In step S18, the acquisition unit 66 acquires, from the imaging device 44, the color forming member image captured in step S16. In step S20, the first derivation unit 68 derives the pressure distribution applied to the color forming member 24 by using the characteristic data 92, based on the color forming member image acquired in step S18. In step S22, the second derivation unit 70 derives the set parameter of the pressurization device 16 by using the pressure distribution derived in step S20. In step S24, the setting unit 72 updates the set parameter of the pressurization device 16 with the set parameter derived in step S22.

In step S26, the notification unit 74 determines whether or not the deviation amount between the pressure distribution derived in step S20 and the reference value is equal to or larger than the threshold value. In a case where the determination is positive, the processing transitions to step S28. In step S28, the notification unit 74 performs the control of displaying the warning message on the display 53 to issue the notification of warning. In a case where the processing of step S28 ends, the pressure measurement processing ends. On the other hand, in a case where the determination in step S26 is negative, the pressure measurement processing ends without executing the processing of step S28.

As described above, according to the present embodiment, it is possible to perform a series of steps of applying the energy to the object by the manufacturing device 10 and measuring the amount of energy applied.

In the above embodiment, a case has been described in which the amount of energy is measured by using the color forming member that forms the color with the density distribution according to the amount of energy applied, but the present invention is not limited thereto. A form may be adopted in which the amount of energy is measured by a sensor device that detects the amount of energy applied. Examples of the sensor device in this case include a tactile sensor and a temperature sensor.

Further, in the above embodiment, a case has been described in which the pressure is employed as the energy applied to the object, but the present disclosure is not limited thereto. For example, a form may be adopted in which heat or ultraviolet rays are employed as the energy applied to the object. In a case where the heat is employed as the energy applied to the object, THERMOSCALE (product name) (manufactured by FUJIFILM Corporation) that forms a color according to an amount of heat can be used as the color forming member 24. Further, in a case where the ultraviolet rays are employed as the energy applied to the object, UVSCALE (product name) (manufactured by FUJIFILM Corporation) that forms a color according to a quantity of ultraviolet rays can be used as the color forming member 24.

Further, in the above embodiment, a form may be adopted in which a plurality of types of amounts of energy among the pressure, the heat, and the ultraviolet rays are measured.

Further, in the above embodiment, a case has been described in which the color forming member 24 in the cartridge form is loaded into the loading mechanism 12, but the present invention is not limited thereto. For example, a roll-shaped color forming member 24 may be loaded into the loading mechanism 12, or a sheet-shaped color forming member 24 may be loaded into the loading mechanism 12. In a case where the roll-shaped color forming member 24 is loaded into the loading mechanism 12, the manufacturing device 10 may comprise a cutting mechanism that cuts the color forming member 24. In a case where the manufacturing device 10 does not comprise the cutting mechanism, the roll-shaped color forming member 24 may be recovered in a roll shape.

In the above embodiment, for example, the following various processors can be used as a hardware structure of a processing unit that executes various types of processing, such as each functional unit of the information processing apparatus 20. The various processors include a programmable logic device (PLD), such as a field programmable gate array (FPGA), which is a processor whose circuit configuration is changeable after manufacturing, a dedicated electric circuit, such as an application specific integrated circuit (ASIC), which is a processor having a circuit configuration exclusively designed to execute specific processing, and the like, in addition to the CPU which is a general-purpose processor that executes software (program) to function as various processing units, as described above.

One processing unit may be configured by using one of the various processors or may be configured by using a combination of two or more processors of the same type or different types (for example, a combination of a plurality of FPGAs or a combination of a CPU and an FPGA). Further, a plurality of processing units may be configured by one processor.

As an example of configuring the plurality of processing units with one processor, first, there is a form in which one processor is configured by a combination of one or more CPUs and software and the processor functions as the plurality of processing units, as represented by computers such as a client and a server. Second, there is a form in which a processor that realizes the functions of the entire system including the plurality of processing units with one integrated circuit (IC) chip is used, as represented by a system-on-chip (SoC) or the like. In this manner, various processing units are configured by using one or more of the above various processors as hardware structures.

Further, more specifically, a circuitry combining circuit elements such as semiconductor elements can be used as the hardware structure of the various processors.

In the above embodiment, the form in which the information processing program 90 is stored (installed) in the storage unit 52 in advance has been described, but the present disclosure is not limited thereto. The information processing program 90 may be provided in a form of being recorded on a recording medium such as a compact disc read only memory (CD-ROM), a digital versatile disc read only memory (DVD-ROM), and a Universal Serial Bus (USB) memory. The information processing program 90 may be downloaded from an external device through a network.

The disclosure of JP2022-185864 filed on November 21, 2022 is incorporated in the present specification by reference. All documents, patent applications, and technical standards described in the present specification are incorporated in the present specification by reference to the same extent as in a case where individual documents, patent applications, and technical standards are specifically and individually indicated to be incorporated by reference.

## Claims

1. A manufacturing device that applies energy to an object, the manufacturing device measuring an amount of energy applied to the object.

2. The manufacturing device according to claim 1,
wherein the energy is at least one of pressure, heat, or ultraviolet rays.

3. The manufacturing device according to claim 1,
wherein a distribution of the amount of energy applied to the object is measured.

4. The manufacturing device according to claim 3,
wherein the distribution of the amount of energy is measured by reading a measurement member in which information according to the amount of energy applied is recorded.

5. The manufacturing device according to claim 4,
wherein the measurement member is a color forming member that forms a color with a density distribution according to the amount of energy applied.

6. The manufacturing device according to claim 1, comprising:
an information processing apparatus that includes at least one processor,
wherein the processor is configured to:
derive a set parameter of an application device that applies energy to the object, using the amount of energy measured.

7. The manufacturing device according to claim 4, further comprising:
a loading mechanism that is capable of loading the measurement member from an outside of the device.

8. The manufacturing device according to claim 7,
wherein the measurement member in a cartridge form, a roll shape, or a sheet shape is loaded into the loading mechanism.

9. The manufacturing device according to claim 7,
wherein the measurement member is loaded into the loading mechanism by a manual operation of a user, or is loaded into the loading mechanism under control of an information processing apparatus.

10. The manufacturing device according to claim 7,
wherein the measurement member is held in a housing of the device.

11. The manufacturing device according to claim 4,
wherein the measurement member is transported by at least one of an electrostatic method, a suction method, or a physical transport method.

12. The manufacturing device according to claim 7,
wherein the measurement member is subjected to a lamination process and dust protection processing.

13. The manufacturing device according to claim 4,
wherein the distribution of the amount of energy is measured by reading the measurement member in a state where the measurement member is disposed on a calibration member.

14. The manufacturing device according to claim 13,
wherein the calibration member is subjected to dust protection processing.

15. The manufacturing device according to claim 4,
wherein the distribution of the amount of energy is measured in a state where external light to the measurement member is blocked by a light shielding member.

16. The manufacturing device according to claim 15,
wherein the measurement member is transported to a position where the external light is blocked after the energy is applied to the object.

17. The manufacturing device according to claim 15, further comprising:
an illumination device that irradiates the measurement member with light.

18. The manufacturing device according to claim 1, further comprising:
an information processing apparatus that includes at least one processor,
wherein the processor is configured to:
issue notification of warning in a case where a deviation amount between the amount of energy measured and a reference value is equal to or larger than a threshold value.

19. The manufacturing device according to claim 18,
wherein the reference value is a statistical value of the amount of energy measured in a past.

20. The manufacturing device according to claim 18,
wherein the processor is configured to set the threshold value using the amount of energy measured in a past.
